# EUROPEAN PATENT SPECIFICATION

(11) **EP 2 015 030 B1**
(45) Date of publication and mention of the grant of the patent: **05.06.2013**
(21) Application number: 08158553.1
(22) Date of filing: 19.06.2008
(51) Int. Cl.: G01D 5/20, G06F 3/046, G06F 3/0354

(54) **Position detector and display device**
Positionsdetektor und Anzeigevorrichtung
Détecteur de position et dispositif d'affichage

(30) Priority: 22.06.2007 JP 2007165469
(43) Date of publication of application: 14.01.2009
(73) Proprietor: Wacom Co., Ltd., Saitama 349-1148 (JP)
(72) Inventor: Fukushima, Masamitsu, Saitama-city, Saitama-ken 331-0812 (JP); Ito, Masamitsu, Minamisaitama-gun Saitama-ken 349-0218 (JP); Horie, Toshihiko, Ageo-city, Saitama-ken 362-0045 (JP)
(74) Representative: Richardt Patentanwälte GbR

(56) References cited:
- EP-A1- 0 159 498
- EP-A1- 1 314 964
- US-A- 4 704 501
- US-A- 4 956 526
- US-A1- 2006 267 580

## Description

### BACKGROUND OF THE INVENTION

### Field of the Invention:

The invention relates to a position detector on which a user operates to indicate positions with a pen-shaped position indicator, and a display device having the position detector, and particularly to a position detector for detecting positions utilizing electromagnetic effect.

### Description of the Related Art:

There are various kinds of input devices, such as keyboards, mice, and joysticks utilized for electronic apparatuses such as personal computers (PCs) and PDAs (Personal Digital Assistants). Among these input devices, there is provided a so-called pen tablet that allows a user to input coordinates by drawing images or graphics on a specific flat-board device using a pen-shaped input device.

US 2006/0267580 A1 discloses a position detecting device which detects the position of an input pen by means of electromagnetic inductive action. A shield plate is positioned below a sensor substrate. A shield layer of a ferromagnetic material is provided to overlap with the shield plate. The shield plate may be formed from silicon steel.

EP 0 159 498 A1 discloses a coordinate input device being a tablet with two orthogonal positioned detecting sections having magnetic bodies, the device further having a position pointing magnetism generator. On the surface of the tablet a display device is provided.

US 4 704 501 discloses a position detecting device which includes a tablet which has a magnetic sheet and two conductor sheets. The magnetic sheet is formed by weaving a group of warp elements with conductor sheets. Each of the conductor sheets has a plurality of linear conductor elements extending substantially parallel to each other. The two conductor sheets are respectively overlaid on the upper and lower sides of the magnetic sheet so that the conductor elements and the magnetic elements extend orthogonally with respect to each other. The corresponding conductor elements of the upper and lower conductor sheets are connected to from alternate exciting and detecting lines.

US 4 956 526 discloses a digitizer for determining a coordinate value of a point designated on a given two-dimensional coordinate plane. A pointing instrument is manually operable to designate a point on the given two-dimensional coordinate plane of a tablet. The tablet includes a flat sensor defining the given two-dimensional coordinate plane and operative for transmitting magnetic signal between the flat sensor and the pointing instrument disposed thereon to detect the designated point to thereby produce a detection signal, and a shielding plate disposed under the flat sensor to magnetically shield the flat sensor. The shielding plate is composed of silicon steel containing 4.0 to 7.0 weight % of silicon.

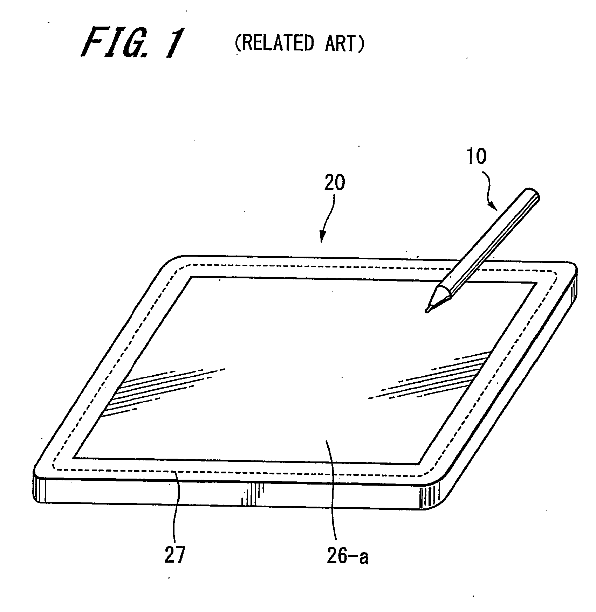

FIG. 1 is a perspective view illustrating a configuration example of a pen tablet according to an embodiment of the invention. The pen tablet shown in FIG. 1 includes a position indicator (pen) 10 having a pencil shape and a sensor (tablet) 20 provided on a sensor substrate 27. The sensor substrate 27, though will be described in detail later, includes a coil for detecting positions, and hence induced electromotive force generated in the coil is used to detect coordinates of positions indicated by the position indicator 10 in the drawing region 26-a of the sensor 20.

The pen tablet of this kind includes a tablet PC which includes the sensor 20 incorporated in a display of a computer (particularly, note-type personal computer), the user inputs coordinates of arbitrary positions by directly drawing on the surface thereof with the position indicator.

First, the principle of such a pen tablet will be described. Note that the "pen tablet" will hereinafter be called a "position detector"; however, the word "pen tablet" is synonymous with the position detector if thereafter used in the description.

The position indicator 10 and sensor 20 in FIG. 1 each include a coil. Operation of the position indicator and sensor 10 will later be described in detail; however, overviews thereof are briefly described as follow. An electromagnetic wave is first transmitted from the sensor 20 side coil in a short period of time. The position indicator 10 side coil receives the electromagnetic wave and resonates at the same frequency as that of the received electromagnetic wave. This implies that energy is stored in the position indicator 10 side resonant circuit. The electromagnetic wave transmitting from the sensor side 20 coil subsequently stops, and the energy stored in resonant circuit is transmitted from the position indicator 10 side coil as an electromagnetic wave.

The electromagnetic wave transmitted from the position indicator 10 side coil is then received again by the sensor 20 side coil, so that the current coordinates indicated by the position indicator 10 is determined in this manner.

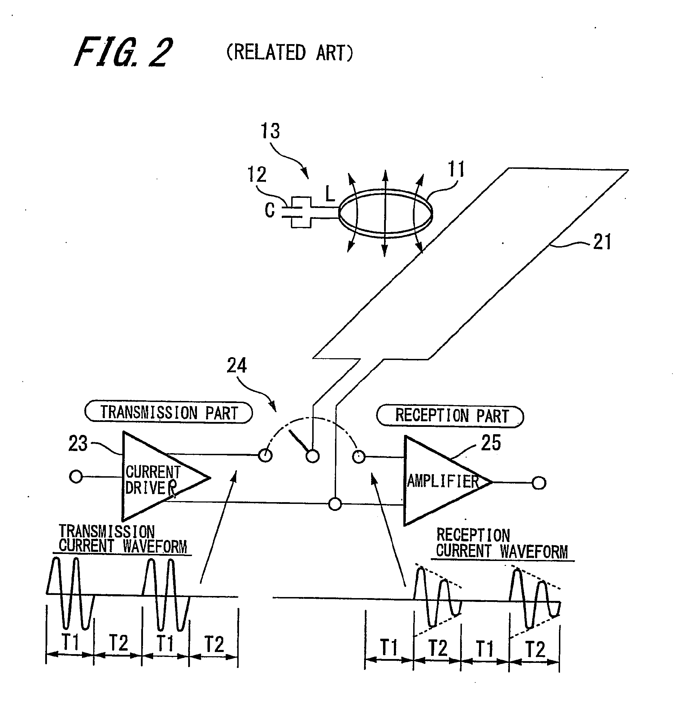

Below is described in detail how coordinates indicated by the position indicator 10 are detected. FIG. 2 is a conceptual view illustrating a position detector having one sensor coil 21 according to an embodiment of the invention. The position indicator 10 includes a resonant circuit 13 having a coil 11 and a capacitor 12. The "coil" is hereafter referred to as a "pen coil".

The sensor coil 21 is provided at the sensor 20 side, and is connected to a transmitting-receiving changeover switch 24. The changeover switch 24 is connected to a current driver 23 and to an amplifier 25, and switches between the current driver 23 and the amplifier 25 both connected to the sensor coil 21. The "coil" provided at the sensor 20 side is hereafter referred to as a "sensor coil".

Next, FIG. 2 illustrates operational steps of the position detector having such a configuration.
1. First, the transmitting-receiving changeover switch 24 is connected to the current driver 23 for a certain amount of time (T1), and supplies an exchange signal to the sensor coil 21 to generate an electromagnetic wave.
2. The electromagnetic wave output from the sensor coil 21 is received by the pen coil 11, and resonates inside the resonant circuit 13 of the position indicator.
3. After the certain amount of time (T1) has elapsed, the transmitting-receiving changeover switch 24 switches to the amplifier 25 for a certain amount of time (T2).
4. Then, no electromagnetic wave is supplied to the position indicator 10, and energy stored in the resonant circuit 13 causes the pen coil 11 to transmit an electromagnetic wave. While the electromagnetic wave is being transmitted for the certain amount of time (T2), no energy is supplied from outside to the resonant circuit 13, thereby gradually attenuating the amplitude of electromagnetic wave transmitted as shown in the received voltage waveform in FIG. 2.
5. The transmitting-receiving changeover switch 24 switches to the current driver 23 again for the certain amount of time (T1), and the same operation described in (1) is carried out.

The electromagnetic wave is transmitted and received in this manner between the sensor 20 side coil and the position indicator 10 side coil. In a case where a plurality of sensor coils 21 are arranged in the sensor 20, the coordinate indicated by the position indicator 10 is determined by detecting which coil of the sensor coils the position indicator side coil is communicating with.

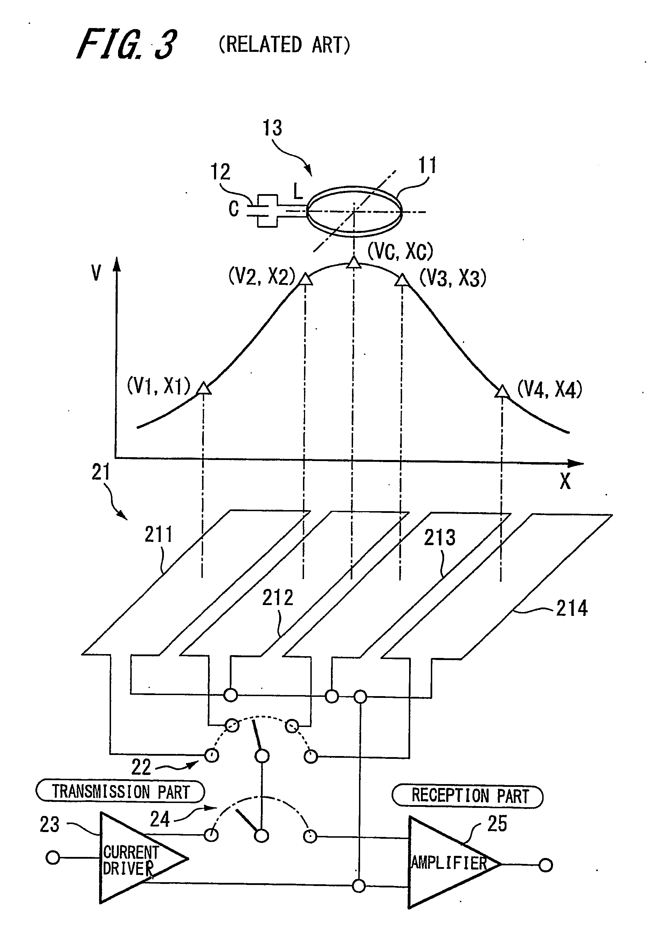

FIG. 3 is a view conceptually illustrating the distribution of induced electromotive force generated from the position indicator 10, the sensor 20 and generated over the sensor 20. The position indicator 10 includes the resonant circuit 13 having the coil 11 and the capacitor 12. The sensor 20 includes a plurality of the sensor coils 21, typical examples of which are illustrated as four sensor coils 211 to 214 in FIG. 3.

The sensor coils 211 to 214 are each connected to a sensor coil changeover switch 22, with which the sensor coils are individually operated. The sensor coil changeover switch 22 is connected to the transmitting-receiving change-over switch 24, so that the sensor coil 21 switches either to transmit or to receive the electromagnetic wave. The transmitting-receiving change-over switch 24 is also connected to the current driver 23 and to the amplifier 25. The current driver 23 generates an alternating current signal.

Below is the description of how a coordinate indicated by the position indicator is detected by the plurality of the sensor coils 21 disposed in the sensor.
(a) First, the sensor coil changeover switch 22 is connected to the sensor coil 211, and the transmitting-receiving change-over switch 24 is connected to the current driver 23. The sensor coil 211 transmits the electromagnetic wave in this manner.
(b) Next, the electromagnetic wave is transmitted and received between the position indicator 10 and the sensor 20 via the transmitting-receiving change-over switch 24 as described from (1) to (5), and hence the value of the induced electromotive force of the sensor coil 211 is detected.
(c) The sensor coil changeover switch 22 sequentially switches between the sensor coils 212, 213, 214 to operate the aforementioned steps (1) to (5).

The sensor coil changeover switch 22 sequentially switches between the sensor coils 211, 212, 213, 214 to detect the magnitude of induced electromotive force for each of the respective sensor coils 211, 212, 213, 214. Thus, the intensity distribution of electromagnetic wave output from the position indicator 10 is obtained for each time the position indicator 10 is placed on the sensor coils 211, 212, 213, or 214, as shown from the graph of FIG. 3. The positions of the sensor coils 211 to 214 are represented by points (X1 to X4) plotted on an X-axis of the graph.

The sensor coils 21 each have a long and thin shape, some of which are arranged in a longitudinal axis (Y-axis) direction, and some of which are arranged in a short axis (X-axis) direction. The sensor coils 21 are arranged in the short axis direction; that is, the sensor coils 21 are arranged in parallel with the X-axis direction, as shown in FIG. 3. The X coordinates on the graph correspond to the central points of the short axes of the sensor coils 21. The X coordinates are optionally determined either as the central points of the sensor coils 21 or as other points of the sensor coils 21.

The induced electromotive force V1 to V4 detected at the respective sensor coils 211 to 214 are plotted on the X-axis as X-coordinates X1 to X4 to approximate a curve, thereby obtaining the graph in FIG. 3. In this graph, the peak of the curve corresponds to a coordinate Xc representing the central axis of the pen coil 11. Thus, X coordinates indicated by the position indicator 10 can be calculated. Likewise, other sensor coils are arranged to intersect with the sensor coils 21 at right angles, so that Y coordinates indicated by the position indicator 10 can be calculated.

Even though the position indicator 10 is moved at an interval shorter than the interval between the sensor coils, the distance between the pen coil 11 and the adjacent sensor coils 21 will still vary, thereby slightly changing the induced electromotive force generated by each of the sensor coils 21. Thus, the coordinates indicated by the position indicator 10 can be calculated using this change.

In this case, resolving power of the coordinates detected can be obtained more precisely than that detected based on the interval between the sensor coils 21. That is, it is preferable that the sensor coils 21 detect the induced electromotive force as precise as possible. The more precise coordinates indicated by the position indicator 10 can thus be detected, and hence the position indicator having high-resolving power can be obtained.

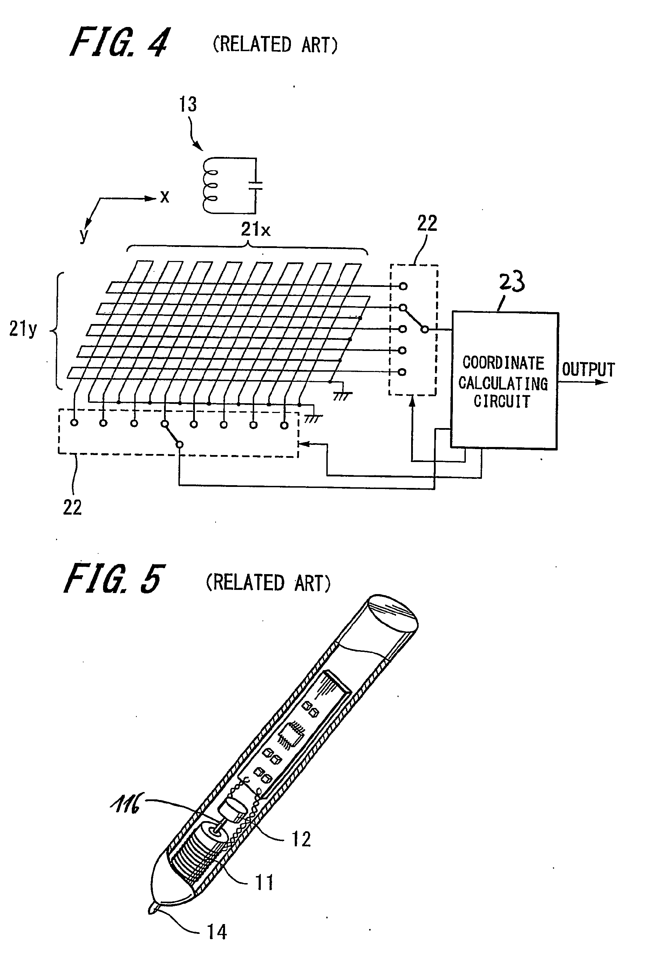

FIG. 4 is a schematic view illustrating a structure of a typical position detector according to an embodiment of the invention. Since the position detector needs detecting X coordinates and Y coordinates, the sensor coils X (21 X) and the sensor coils Y (21Y) are respectively arranged corresponding to the X-axis and Y-axis. The transmitting-receiving changeover switch 24, current driver 23, and amplifier 25 shown in FIG. 3 are arranged inside a coordinate calculating circuit 23.

The sensor coils X and the sensor coils Y are each caused to perform the aforementioned operations (a) to (c), so that the position detector obtains X coordinates and Y coordinates of the position indicator 10.

The user can input information with the positional indicator 10 in a manner similar to drawing characters and pictures on paper with a pen. It is desirable to change thickness of lines drawn by adjusting pen pressure or angles of the position indicator while drawing the lines with the inclined position indicator. Thus, the pen pressure or angles of inclination of the position indicator need to be detected to achieve the change in drawing lines.

FIG. 5 illustrates one example of the position indicator 10 performing such operation. As illustrated in the figure, the pen coil 11 is connected with a core extending from a pen point 14, and a capacitor 12 is connected to an end of the core. In the position indicator 10, when pressure is applied to the pen point 14, the core is moved to press the capacitor. The capacitor 12 usually has two electrodes mutually faced, and a dielectric is located therebetween.

In a case where a material for dielectric having the permittivity that varies with pressure is used, capacitance of the capacitor 12 can be changed when force is applied to the pen point 14. Thus, the resonance frequency of the resonant circuit 13 can be changed by the application of the pen pressure.

The electromagnetic induction-type position detector transmits and receives an electric signal between the position indicator 10 and the sensor 20 utilizing electromagnetic induction. In other words, radio waves are transmitted and received between the position indicator 10 and the sensor 20. The electromagnetic wave is generally extremely weak, and tends to adversely be interfered by an external noise. Further, the position detector having higher resolving power is preferably to accurately detect induced electromotive force generated by the pen coil 11, and thus the sensor coils 21 needs receiving noise as little as possible.

Japanese Unexamined Patent Application Publication H07-115291 discloses a shield plate formed by arranging amorphous metal ribbons in parallel to form a plate, and stacking an aluminum plate on top of the resulting plate.

### Summary of the Invention

The invention provides a position detector, a display device and a battery-powered hand-held electronic appliance as claimed in the independent claims. Embodiments of the invention are given in the dependent claims.

There have been manufactured mobile electronic apparatuses each incorporating a pen tablet. In manufacturing such mobile electronic apparatuses, an entire mobile electronic apparatus preferably has a smaller size and lightweight to improve the portability thereof. Such a small, lightweight mobile electronic apparatus incorporating the pen tablet can be formed by stacking a sensor substrate 27 having the sensor coils 21 on an electronic circuit.

However, when the sensor substrate is stacked on the electronic circuit, the magnetic field output from the sensor coils 21 on the sensor substrate to the position indicator 10 is attenuated due to the interference from metallic portions of the electronic circuit, thereby lowering the magnetic field received by the position indicator 10. In addition, if the sensor substrate is stacked on the electronic circuit, noise generated from the electronic circuit interferes the sensor coils 21, thereby failing to detect the coordinate of the position indicator 10 with accuracy.

Thus, it is desirable that interference due to noise such as electromagnetic interference (EMI) be reduced without attenuating the magnetic field or the like output from the sensor coils 21 in manufacturing the mobile electronic apparatus incorporating a pen tablet function.

One technique for the sensor coils 21 not to receive interference due to the noise generated by the electric circuit involves providing electromagnetic shielding such as aluminum foil and copper foil between the sensor coils 21 and the electric circuit, so that the noise such as the electromagnetic waves is intercepted by the electromagnetic shielding, thereby reducing the interference with the sensor coils 21. However, although providing the electromagnetic shielding for the sensor coil 21 can reduce the noise generated by the electric circuit, the magnetic field induced by the sensor coils 21 generates eddy current in the electromagnetic shielding, thereby attenuating the magnetic field generated over the sensor coils 21 due to the eddy current.

To prevent the magnetic field from being attenuated due to the eddy current, a silicon steel plate may be employed in place of the electromagnetic shielding such as the aluminum foil. The silicon steel plate has a property to pass through magnetic flux therein, and provides the effect of an electromagnetic shielding if the thickness thereof is adjusted approximately to 0.5 mm. However, since the silicon steel plate is generally heavier than the aluminum foil or the like, and the entire mobile electronic apparatus will thus be heavy. The silicon steel plate is thus unsuitable for being incorporated in the mobile electronic apparatus. Moreover, since the silicon steel plate is generally more expensive than the aluminum foil or the like, and the cost of the mobile electronic apparatus will be relatively high. The silicon steel plate is thus unsuitable for being incorporated in the mobile electronic apparatus.

Further, an amorphous ribbon is generally known as a material to pass through the magnetic flux without attenuating the magnetic field. Thus, the amorphous ribbon may be employed instead of the silicon steel plate. However, since the amorphous ribbon is formed with the thickness of approximately 50 µm, the amorphous ribbon fails to function as electromagnetic shielding.

An embodiment of the invention provides a magnetic path plate that exhibits a function as electromagnetic shielding, that will not attenuate the magnetic field generated by the position indicator 10 or the sensor coils 21, and that will not easily be affected by the magnetic noise from the outside; a position detector having the magnetic path plate; and a display device having the position detector.

An embodiment of the invention provides a magnetic path plate that functions as electromagnetic shielding that will pass through magnetic flux without attenuating the magnetic field generated by the position indicator 10 or the sensor coils 21, and that will be less expensive; a position detector having the magnetic path plate; and a display device having the position detector.

Further, a display device according to an embodiment of the invention includes a sensor substrate having a sensor coil for receiving an electromagnetic wave output from a position indicator, a magnetic path plate having an area equal to or larger than an area in which the sensor coil is arranged on the sensor substrate, and a display unit provided on one surface of the sensor substrate. In the display, the magnetic path plate is formed by stacking an amorphous layer and metal having relative magnetic permeability lower than that of the amorphous layer, and the magnetic path plate is arranged on an opposite surface to a surface where the sensor substrate 27 faces the position indicator. Note that a display unit according to one embodiment of the invention may include the sensor substrate that is formed of a transparent material, and the display unit that is placed between the sensor substrate and the magnetic path plate.

An embodiment of the invention provides a position detector that will not receive interference due to noise generated by an electronic circuit, and a display unit that includes the position detector. In the embodiment, the magnetic path plate includes amorphous metal and metal having relative magnetic permeability lower than that of the amorphous metal such as aluminum. Since aluminum has weight lighter than that of the amorphous metal, the position detector and the display unit according to the embodiment can attain lightweight.

### Brief Description of the Drawings

FIG. 1 is a perspective view illustrating an overall configuration example of a position detector according to the related art.
FIG. 2 is a schematic diagram illustrating the detecting principle of the position detector having one sensor coil according to the related art.
FIG. 3 is a schematic diagram illustrating the detecting principle of the position detector having a plurality of sensor coils according to the related art.
FIG. 4 is a schematic diagram illustrating the detecting principle of a typical position detector according to the related art.
FIG. 5 is a partially fractured perspective view illustrating an internal configuration example of the position detector according to the related art.
FIG. 6 is an exploded perspective view illustrating a position detector according to an embodiment of the invention.
FIG. 7A is a perspective view illustrating one example of a magnetic path plate, and
   FIG. 7B is a sectional view thereof according to an embodiment of the invention.
FIG. 8A is a sectional view illustrating magnetic field lines of the sensor coil passing through the magnetic path plate, and FIG. 8B is a sectional view illustrating magnetic field lines of noise passing through the magnetic path plate according to an embodiment of the invention.
   Fig. 8C is a more detailed view of the electromagnetic field emitted by the position indicator of Fig. 8A.
FIG. 9 is a characteristic diagram illustrating curves indicating levels of receiving signals according to an embodiment of the invention.
FIG. 10 is a perspective view illustrating one example of a personal computer utilizing the position detector according to an embodiment of the invention.
FIG. 11 is an exploded perspective view illustrating a major part of a display according to an embodiment of the invention.
FIG. 12A is a perspective view illustrating an overall position detector utilizing PDA, and FIG. 12B is an exploded perspective view illustrating the major part thereof according to an embodiment of the invention.
FIG. 13 illustrates another example according to an embodiment of the invention.

### Description of the preferred embodiments:

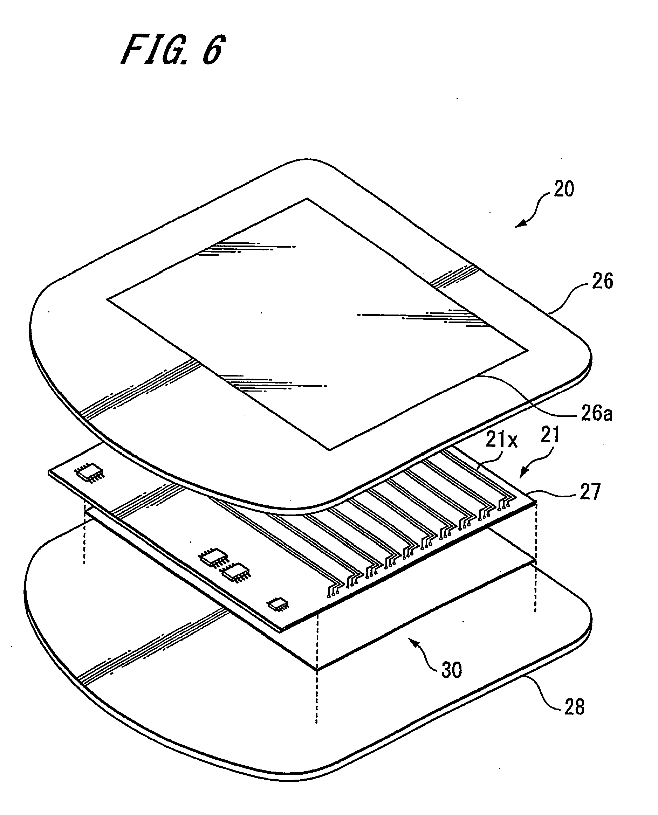

Embodiments of the invention will now be described with reference to accompanied drawings FIGS. 6 to 13.
FIG. 6 is an exploded perspective view illustrating a position detector 20 according to an embodiment of the invention. As shown in the figure, a sensor substrate 27 and a magnetic path means plate 30 are arranged between an upper case 26 and a lower case 28. In the embodiment considered here the magnetic path means has a plate-like form and is referred to as magnetic path plate 30 in the following. It is to be noted that the magnetic path means can have another form such as a curved, convex or concave shape.

The upper case 26 includes a drawing plane 26a used for the position indicator 10 (not shown in FIG. 6). The magnetic path plate 30 is arranged on a surface (lower case 28 side) opposite to a surface (upper case 26 side) where the sensor substrate 27 faces the position indicator 10. The sensor substrate 27 has a sensor coil 21 that detects a coordinate indicated by the position indicator 10.

The sensor coil 21 includes a sensor coil 21 x for detecting x coordinates provided on one surface the sensor substrate 27, and a sensor coil 21 y (not shown in FIG. 6) for detecting y coordinates provided on the other surface thereof. The sensor coil 21 includes a sensor coil 21 x for detecting x coordinates provided on one surface the sensor substrate 27, and a sensor coil 21 y (not shown in FIG. 6) for detecting y coordinates provided on the other surface thereof. It is preferable that the area in which the sensor coil 21 is arranged have an equal size as an area of the drawing plane 26a in the sensor substrate 27.

The magnetic path plate 30 is utilized, when the sensor coil 21 receives an electromagnetic wave output from the position indicator 10, for preventing the sensor coil 21 from receiving electromagnetic noise generated from an opposite side of the position indicator 10. Further, in a case where a metallic plate or the like is placed on a side of the sensor coil 21 opposite to a side where the position indicator 10 will eventually be located; that is, in a case where the position detector is placed on the metallic plate, the magnetic field generated by the magnetic path plate 30 over the sensor coil 21 can be prevented from attenuating in the metallic plate. Accordingly, the magnetic path plate 30 can effectively function if the magnetic path plate 30 has an area equal to or larger than an area in which the sensor coil 21 is arranged. It is desirable that the magnetic path plate 30 have further large area if the electromagnetic noise obliquely enters to the substrate on which the sensor coil 21 is arranged.

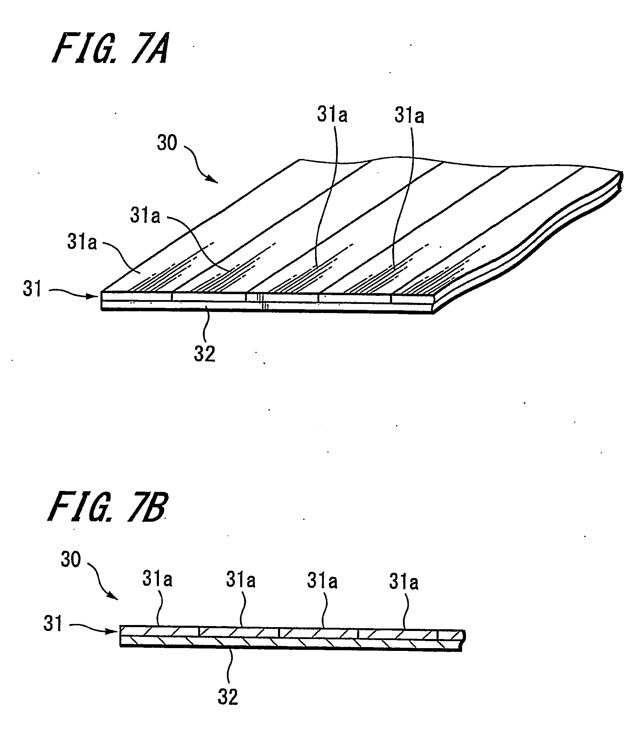

Next, the magnetic path plate 30 utilized for the embodiment will be described in details. FIG. 7A is a partial perspective view illustrating a configuration example of the magnetic path plate 30, and FIG. 7B is a sectional view thereof according to an embodiment of the invention. The magnetic path plate 30 includes an amorphous layer 31 and non-amorphous layer 32 formed of metal with relative magnetic permeability lower than that of amorphous layer 31. An example of metal used as the non-amorphous layer 32 includes aluminum. The amorphous layer 31 is formed by arranging a plurality of amorphous metal strips 31 a in parallel with the longitudinal axis thereof to form a plane.

The amorphous layer 31 is extremely thin (approximately 20 µm), so that electric shielding obtained may not be effective. The magnetic path plate 30 includes aluminum as metal having relative permeability lower than that of the amorphous layer 31. Since aluminum is light, the position detector made of aluminum can be made lighter as compared with the related art position detector made of a silicon steel plate. Further, cost can be reduced by using aluminum in manufacturing. Note that a material for forming non-amorphous layer 32 is not limited to aluminum; however, any kinds of metal capable of providing electric shielding or those having relative permeability lower than that of the amorphous metal 31 a can be employed.

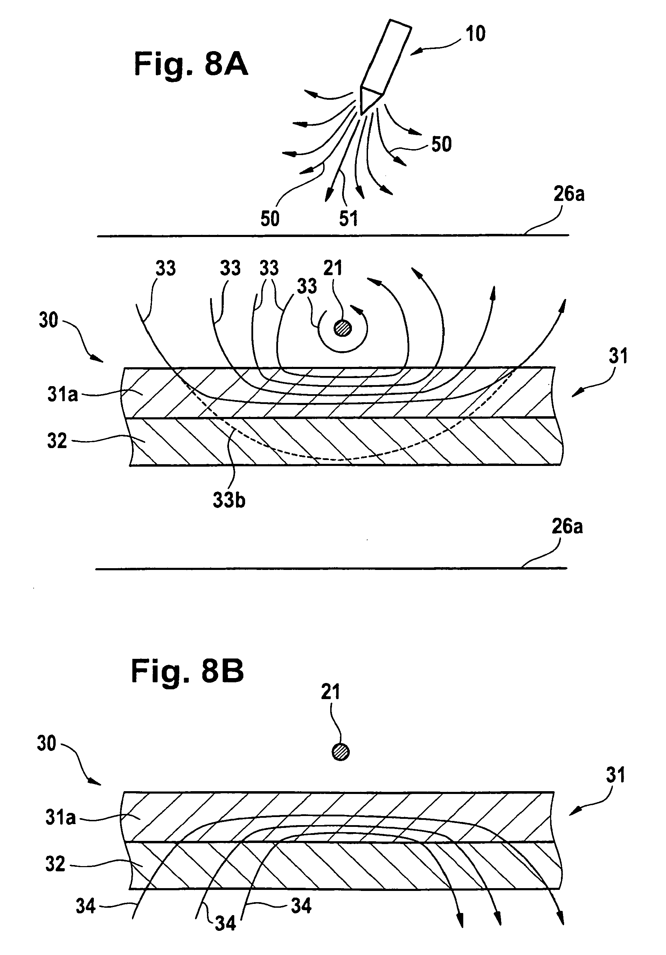

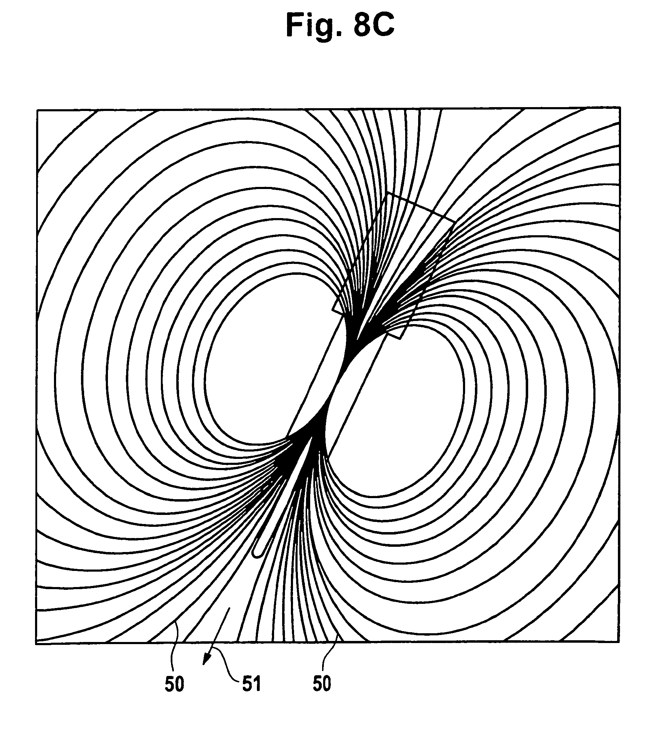

FIGS. 8A, 8B are each a sectional view illustrating how the aforementioned magnetic path plate 30 generates paths of magnetic flux. When the position indicator 10 is located above the drawing region 26-a it may emit an electromagnetic wave 50 that propagates into a first direction 51 towards the drawing region 26-a. The senor coil 21 is arranged below the drawing region 26-a in order to receive the electromagnetic wave 50 from the first direction 51. Hence, the magnetic path plate 30 is arranged behind the sensor coil 21 in the first direction 51. Fig. 8C shows a more detailed view of the electromagnetic wave 50.

FIG. 8A illustrates how the magnetic flux 33 generated by current from the sensor coil 21 passes through the amorphous layer 31 of the magnetic path plate 30. As shown in the figure, the magnetic flux 33 enters the amorphous metal 31 a, proceeds along the amorphous layer 31, and comes out of the surface of the amorphous metal 31 a of the magnetic path plate 30. In other words, the amorphous layer 31 generates the magnetic paths through which the magnetic flux passes. The dotted line in the figure shows a magnetic force line 33b in a case where no amorphous layer 31 is provided. In comparing the magnetic path plate having the amorphous layer 31 (solid line) with that without the amorphous layer 31 (dotted line), the magnetic force lines pass through the amorphous layer 31 and come out of the surface of the amorphous layer 31 in a case where the magnetic path plate 30 has the amorphous layer 31. This implies that the amorphous layer 31 generates the magnetic paths.

Likewise, FIG. 8B illustrates how magnetic flux 34 enters the amorphous metal 31 a from the opposite side of the sensor coil 21 provided above the magnetic path plate 30. The magnetic flux 34 is so-called "magnetic noise". As shown in the figure, the magnetic flux 34 that will be noise enters from non-amorphous layer 32 into the amorphous layer 31 a, and comes out again of the surface of the non-amorphous layer 31. Thus, the magnetic flux 34 or noise will not reach the sensor coil 21 due to the magnetic paths generated by the amorphous layer 31. Since the amorphous layer 31 generates the paths for the magnetic flux 33, 34, the magnetic flux will not penetrate the amorphous layer 31, and hence, external magnetic noise will not interfere with the magnetic field generated by the sensor coil 21.

It is to be noted that the arrangement of the amorphous layer 31 on top of the non-amorphous layer 32 as shown in Fig. 8 is not essential. It is also possible to arrange the non-amorphous layer 32 on top of the amorphous layer 31 as this provides substantially the same effect.

The invention is particularly beneficial for battery-powered hand-held electronic appliances, such as a personal digital assistant, a mobile communication device, such as a mobile phone or a smart phone, a navigation device, a digital camera or the like. As the signal-to-noise ratio improves less power is required for the reception which helps to extend the battery lifetime.

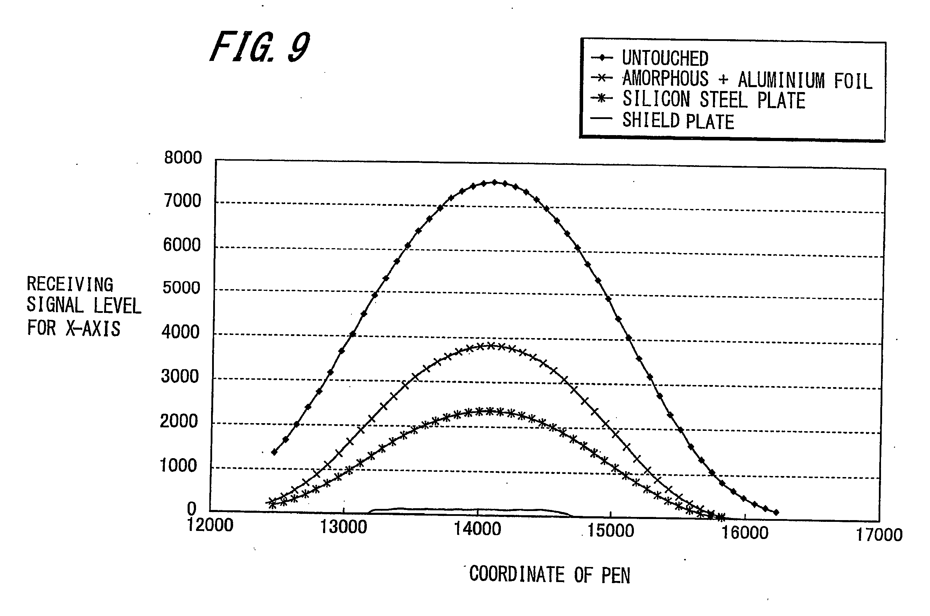

Hereafter, an example that compares a position detector having the magnetic path plate 30 of the embodiment with a position detector having the related art shielding plate will be described based on a graph in FIG. 9. FIG. 9 shows the graph representing the induced electromotive force generated from the position indicator 10 that is measured in a region close to the pen point 14. The coordinate of the pen point 14 corresponds to the peak of the graph. The induced electromotive force is measured under the following three conditions: the detector having the related art electrostatic shielding, the detector without the related art electrostatic shielding, and the detector having the shielding plate of this embodiment. A horizontal axis of the graph represents coordinates; however, the scale is arbitrarily set.

A symbol "◆" of the graph shows an outcome measured with the detector without the magnetic path plate indicating no effect of noise. A symbol "x" of the graph shows an outcome measured with the detector having the magnetic path plate of the embodiment. A symbol "*" of the graph shows an outcome measured with the detector having the related art silicon steel plate, and a solid line of the graph shows an outcome measured with the detector having shielding used by those having ordinary skills in the art. The outcome shows that the detector without the magnetic path plate shows the highest signal level received by the sensor coil. Further, the detector having shielding of the ordinary metallic plate shows almost no signal level.

As shown in FIG. 9, in comparing the detector having a combination of an amorphous layer and aluminum foil with the detector having a silicon steel plate, the detector having the amorphous layer and the aluminum foil shows a signal level approximately twice the detector having the silicon steel plate, thereby clearly showing an increase of the signal level. Since the aluminum foil is produced by expanding aluminum thinly and thus the obtained product is the aluminum layer. The graph shows that the detector having the amorphous layer and aluminum foil can acquire a higher signal level than the detector having the silicon steel plate.

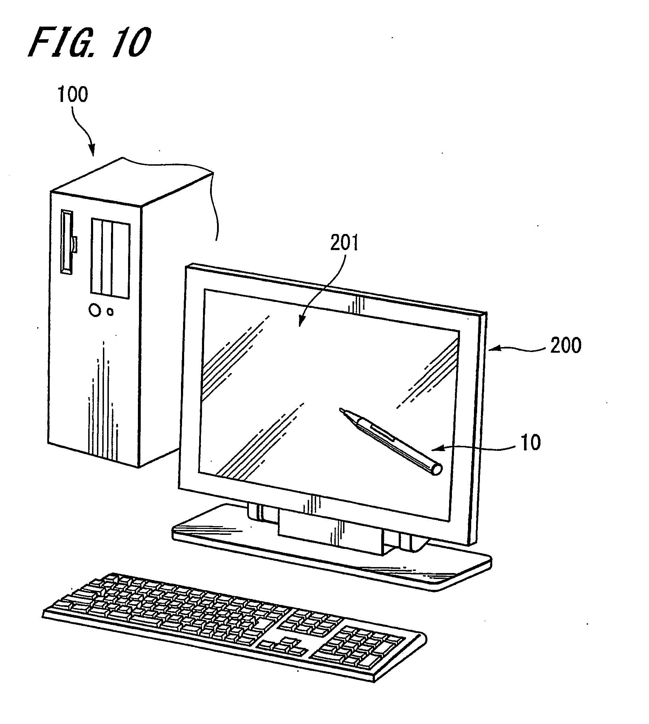

FIG. 10 is a configuration example of a computer apparatus employing a position detector according to an embodiment of the invention. In the configuration example, a display 200 connected to a personal computer 100 includes a sensor 20 (not shown in FIG. 9), and a position indicator 10 that is operated on the screen of the display 200 to indicate a coordinate.

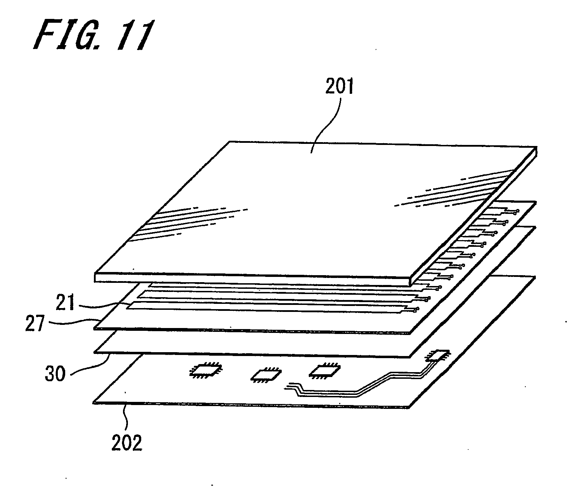

FIG. 11 is an exploded perspective view illustrating main portions of the display 200 shown in FIG. 10. As shown in the figure, the sensor substrate 27 is placed on the opposite side of the position where the position indicator 10 is placed on the surface of a display panel 201, and the magnetic path plate 30 is placed beneath the sensor substrate 27. A driving circuit board 202 driving the display panel 201 is placed on the opposite side of the sensor substrate 27 located above the magnetic path plate 30. A display panel 201 herein implies a liquid crystal panel. The liquid crystal panel includes a glass substrate, a backlight, a polarizing plate or the like; however, the liquid crystal panel according to this embodiment includes all these components.

The display panel 201 having such configuration can cut off the noise generated by the driving circuit board 202 using the magnetic path plate 30. Thus, the user can operate the position indicator 10 so as to draw directly on the surface of the display 200 when inputting coordinates in the personal computer 100. FIGS. 10 and 11 illustrate examples of the personal computer 100 where a main body and the display 200 are separately configured; however, the main body and the display can be integrated such as a note-type computer.

As described so far, since the magnetic path plate 30 is formed by stacking the amorphous layer 31 and aluminum layer 32, the electromagnetic noise generated by the driving circuit board 202 can be cut off, attenuation of the magnetic field due to eddy current can be prevented, and further, the detector can be reduced in weight.

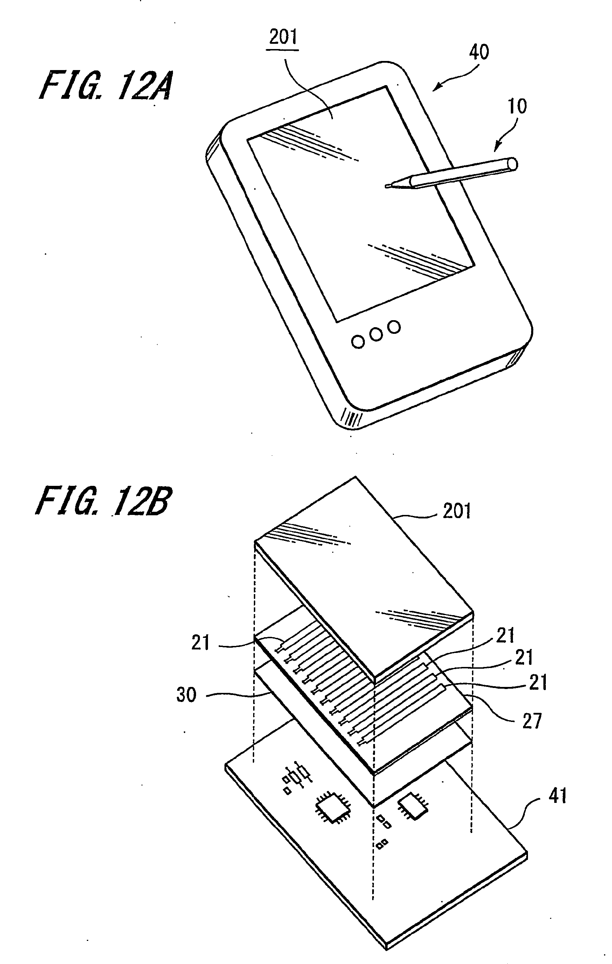

FIG. 12A is an overall view illustrating one example of a personal digital assistant (PDA) 40 as a mobile electronic apparatus, whereas FIG. 12B is an exploded perspective view illustrating main components thereof. FIG. 12B shows that a position detector of PDA 40 includes the display panel 201 having the sensor substrate 27, the magnetic path plate 30, and a display panel driving circuit board 41 located therebeneath. The display panel 201 herein implies a liquid crystal panel.

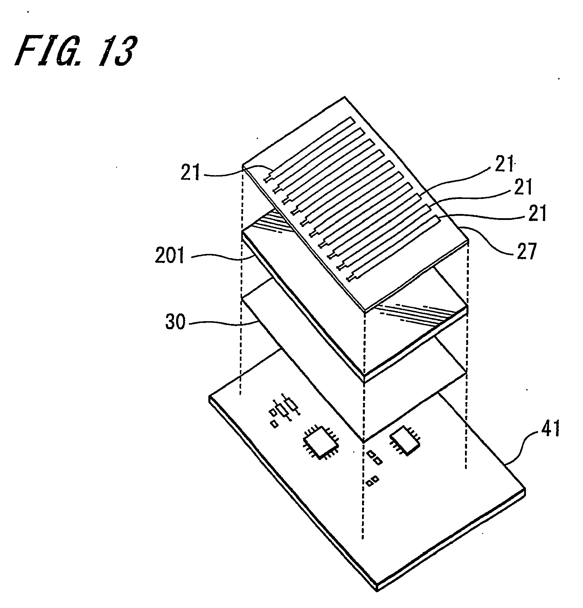

The position detector of the embodiment includes the sensor coil 21 located between the position indicator 10 and the magnetic path plate 30, and hence noise generated by the display panel driving circuit board 41 can be cut off. Further, attenuation of the magnetic field due to eddy current of a pen coil 11, not shown in FIG. 13, can be lowered.

Since the position detector of the embodiment includes the magnetic path plate 30 having the amorphous layer 31 and non-amorphous layer 32, for which aluminum is used, the position detector of the embodiment can effectively be reduced in weight in comparison with the position detector having the related art silicon steel plate for electromagnetic shielding. Thus, the position detector of the embodiment can be used, in combination with the position indicator, for an electronic organizer, a portable video game player, and a mobile phone as well as the PDA.

Further, FIGS. 10 to 12A, 12B show the embodiments of the display panel 201 having the liquid crystal panel; however, the embodiments are not limited thereto, and a display panel having an electroluminescence device or light emitting diode may also be employed. In addition, the display panel may be used for a display device known as an electronic paper, or plasma display.

FIG. 13 illustrates an example of the position detector having the sensor substrate 27 located above the display panel 201. The sensor substrate 27 includes a transparent substrate such as glass, while the sensor coil 21 is formed with fine lines generally invisible with the naked eye, and is formed of a transparent conducting material such as indium tin oxide (ITO). Since light passes through the sensor substrate 27 and the sensor coil 21 is invisible with the naked eye, the sensor substrate 27 can be arranged on the surface of the display panel 201 (i.e., display surface).
In this configuration, the magnetic path plate 30 is arranged on the opposite side of the sensor substrate 27 located beneath the display panel 201. In other words, the magnetic path plate is placed on the opposite side of the sensor substrate 27 on the display panel 201. Further, a material or the sensor coil 21 may include metallic fine lines in addition to the transparent conductive material.

It should be understood by those skilled in the art that various modifications, combinations, sub-combinations and alterations may occur depending on design requirements and other factors insofar as they are within the scope of the appended claims or the equivalents thereof.

## Claims

1. A position detecting system (20) comprising:
sensor means (27) having a sensor coil (21) for receiving an electromagnetic wave output (50) from a position indicator (10),
a magnetic path plate comprising a first layer (31, 31 a) formed of amorphous metal and a second layer (32) formed of non-amorphous metal, the second layer having a relative magnetic permeability lower than that of the first layer, the first and the second layers of the magnetic path plate being stacked, wherein
the sensor means have a substrate that is formed of a transparent material, wherein the magnetic path plate is arranged at a side of the sensor substrate opposite to a side facing the position indicator (10),
a display unit being placed between the sensor substrate and the magnetic path plate, wherein the magnetic path plate is placed such that its amorphous layer is placed between the display unit and the non-amorphous layer,
the amorphous layer is configured, based on its relative magnetic permeability, to form a magnetic path for magnetic flux generated by the sensor coil of the sensor substrate, and the relative magnetic permeability preventing attenuation of the magnetic flux generated by the sensor coil of the sensor substrate due to eddy current loss, and
the non-amorphous layer is configured as aluminum having relative magnetic permeability that is lower than that of the amorphous layer, and having conductivity shielding the sensor substrate from electromagnetic noise.

2. The position detector according to claim 1, the first layer being formed a plurality of amorphous metal strips (31a) being arranged in parallel.

3. The position detector of any one of the preceding claims, the first layer having a thickness below 50 µm, preferably approximately 20 µm.

4. A battery-powered hand-held electronic appliance having a display device in accordance with one of claims 1 to 3.

5. The battery-powered hand-held electronic appliance of claim 4, being a personal digital assistant, a mobile communication device, such as a mobile phone or a smart phone, a navigation device or a digital camera.

6. A method of forming a position detecting system, the method comprising:
providing sensor means (27) having a sensor coil (21) for receiving an electromagnetic wave output (50) from a position indicator (10),
providing a magnetic path plate (30), the magnetic path plate comprising a first layer (31, 31 a) formed of amorphous metal and a second layer (32) formed of non-amorphous metal, the second layer having a relative magnetic permeability lower than that of the first layer, the first and second layers of the magnetic path plate being stacked, and
providing a display unit,
wherein:
the sensor means have a substrate that is formed of a transparent material, wherein the plate is arranged at a side of the sensor substrate opposite to a side facing the position indicator (10),
the display unit being placed between the sensor substrate and the magnetic path plate, wherein the magnetic path plate is placed such that its amorphous layer is placed between the display unit and the non-amorphous layer,
the amorphous layer is configured, based on its relative magnetic permeability, to form a magnetic path for magnetic flux generated by the sensor coil of the sensor substrate, the relative magnetic permeability preventing attenuation of the magnetic flux generated by the sensor coll of the sensor substrate due to eddy current loss, and
the non-amorphous layer is configured as aluminum having relative magnetic permeability that is lower than that of the amorphous layer, and having conductivity shielding the sensor substrate from electromagnetic noise.

## Patentansprüche

1. Positionsdetektorsystem (20), aufweisend:
eine Sensoreinrichtung (27) mit einer Sensorspule (21) zum Empfangen einer Ausgabe (50) in Form von elektromagentischen Wellen von einem Positionsanzeiger (10),
eine Magnetpfadplatte, die eine erste, aus amorphem Metall gebildete Schicht (31, 31a) und eine zweite, aus nicht-amorphem Metall gebildete Schicht (32) aufweist, wobei die zweite Schicht eine relative magnetische Durchlässigkeit aufweist, die geringer ist als die der ersten Schicht, wobei die ersten und die zweiten Schichten der Magnetpfadplatte übereinander liegen, wobei
die Sensoreinrichtung ein Substrat aufweist, das aus einem transparenten Material gebildet ist, wobei die Magnetpfadplatte auf einer Seite des Sensorsubstrats angeordnet ist, die einer Seite, welche dem Positionsanzeiger (10) zugewandt ist, entgegengesetzt ist,
eine Anzeigeeinheit zwischen dem Sensorsubstrat und der Magnetpfadplatte angeordnet ist, wobei die Magnetpfadplatte so angeordnet ist, dass ihre amorphe Schicht zwischen der Anzeigeeinheit und der nicht-amorphen Schicht angeordnet ist,
die amorphe Schicht auf Basis ihrer relativen magnetischen Durchlässigkeit so gestaltet ist, dass sie einen Magnetpfad für einen Magnetfluss bildet, der von der Sensorspule des Sensorsubstrats erzeugt wird, und die relative magnetische Durchlässigkeit eine Dämpfung des Magnetflusses, der von der Sensorspule des Sensorsubstrats aufgrund von Wirbelstromverlust erzeugt wird, verhindert, und
die nicht-amorphe Schicht als Aluminium gestaltet ist, das eine relative magnetische Durchlässigkeit aufweist, die niedriger ist als die der amorphen Schicht, und eine Leitfähigkeit aufweist, die das Sensorsubstrat gegen elektromagnetisches Rauschen abschirmt.

2. Positionsdetektor nach Anspruch 1, wobei die erste Schicht aus einer Mehrzahl von amorphen Metallstreifen (31a) gebildet ist, die parallel angeordnet sind.

3. Positionsdetektor nach einem der vorangehenden Ansprüche, wobei die erste Schicht eine Dicke von weniger als 50 µm, vorzugsweise von ungefähr 20 µm aufweist.

4. Batteriebetriebener, elektronischer Handapparat mit einer Anzeigevorrichtung gemäß einem der Ansprüche 1 bis 3.

5. Batteriebetriebener, elektronischer Handapparat nach Anspruch 4, bei dem es sich um einen elektronischen Organizer, eine mobile Kommunikationsvorrichtung, wie ein Mobiltelefon oder ein Smart-Phone, eine Navigationsvorrichtung oder eine digitale Kamera handelt.

6. Verfahren zum Ausbilden eines Positionsdetektorsystems, wobei das Verfahren umfasst:
Bereitstellen einer Sensoreinrichtung (27) mit einer Sensorspule (21) zum Empfangen einer Ausgabe (50) in Form von elektromagentischen Wellen von einem Positionsanzeiger (10),
Bereitstellen einer Magnetpfadplatte, die eine erste, aus amorphem Metall gebildete Schicht (31, 31a) und eine zweite, aus nicht-amorphem Metall gebildete Schicht (32) aufweist, wobei die zweite Schicht eine relative magnetische Durchlässigkeit aufweist, die geringer ist als die der ersten Schicht, wobei die ersten und die zweiten Schichten der Magnetpfadplatte übereinander liegen, und
Bereitstellen einer Anzeigeeinheit,
wobei
die Sensoreinrichtung ein Substrat aufweist, das aus einem transparenten Material gebildet ist, wobei die Platte auf einer Seite des Sensorsubstrats angeordnet ist, die einer Seite, welche dem Positionsanzeiger (10) zugewandt ist, entgegengesetzt ist,
wobei
die Anzeigeeinheit zwischen dem Sensorsubstrat und der Magnetpfadplatte angeordnet ist, wobei die Magnetpfadplatte so angeordnet ist, dass ihre amorphe Schicht zwischen der Anzeigeeinheit und der nicht-amorphen Schicht angeordnet ist,
die amorphe Schicht auf Basis ihrer relativen magnetischen Durchlässigkeit so gestaltet ist, dass sie einen Magnetpfad für einen Magnetfluss bildet, der von der Sensorspule des Sensorsubstrats erzeugt wird, die relative magnetische Durchlässigkeit eine Dämpfung des Magnetflusses, der von der Sensorspule des Sensorsubstrats aufgrund von Wirbelstromverlust erzeugt wird, verhindert, und
die nicht-amorphe Schicht als Aluminium gestaltet ist, das eine relative magnetische Durchlässigkeit aufweist, die niedriger ist als die der amorphen Schicht, und eine Leitfähigkeit aufweist, die das Sensorsubstrat gegen elektromagnetisches Rauschen abschirmt.

## Revendications

1. Système de détection de position (20) comprenant :
des moyens de détection (27) possédant une bobine de détecteur (21) pour la réception d'une sortie d'onde électromagnétique (50) venant d'un indicateur de position (10),
une plaque de chemin magnétique comprenant une première couche (31, 31a) constituée d'un métal amorphe et une deuxième couche (32) constituée d'un métal non-amorphe, la deuxième couche présentant une perméabilité magnétique relative plus faible que celle de la première couche, les première et deuxième couches de la plaque de chemin magnétique étant superposées, dans lequel
les moyens de détection comportent un substrat constitué d'un matériau transparent, dans lequel la plaque de chemin magnétique est agencée d'un côté du substrat de détecteur à l'opposé d'un côté tourné vers l'indicateur de position (10),
une unité d'affichage étant disposée entre le substrat de détecteur et la plaque de chemin magnétique, dans lequel la plaque de chemin magnétique est disposée de manière à ce que sa couche amorphe soit disposée entre l'unité d'affichage et la couche non-amorphe,
la couche amorphe est configurée, de par sa perméabilité magnétique relative, pour former un chemin magnétique pour le flux magnétique généré par la bobine de détecteur du substrat de détecteur, et la perméabilité magnétique relative empêchant l'atténuation du flux magnétique généré par la bobine de détecteur du substrat de détecteur en raison de pertes par courant de Foucault, et
la couche non-amorphe est configurée comme de l'aluminium présentant une perméabilité magnétique relative plus faible que celle de la couche amorphe, et présentant une conductivité protégeant le substrat de détecteur contre le bruit électromagnétique.

2. Détecteur de position selon la revendication 1, dans lequel la première couche est constituée d'une pluralité de bandes métalliques amorphes (31a) agencées en parallèle.

3. Détecteur de position selon l'une quelconque des revendications précédentes, dans lequel la première couche présente une épaisseur inférieure à 50 µm, de préférence de 20 µm environ.

4. Appareil électronique portable à batterie possédant un dispositif d'affichage selon l'une des revendications 1 à 3.

5. Appareil électronique portable à batterie selon la revendication 4, consistant en un assistant numérique, un dispositif de communication portable, tel qu'un téléphone portable ou un smart-phone, un dispositif de navigation ou un appareil photo numérique.

6. Procédé pour la réalisation d'un système de détection de position, le procédé comprenant :
l'apport de moyens de détection (27) possédant une bobine de détecteur (21) pour recevoir une sortie d'onde électromagnétique (50) venant d'un indicateur de position (10),
l'apport d'une plaque de chemin magnétique comprenant une première couche (31, 31 a) constituée d'un métal amorphe et une deuxième couche (32) constituée d'un métal non-amorphe, la deuxième couche présentant une perméabilité magnétique relative plus faible que celle de la première couche, les première et deuxième couches de la plaque de chemin magnétique étant superposées, et
l'apport d'une unité d'affichage,
dans lequel :
les moyens de détection comportent un substrat constitué d'un matériau transparent, dans lequel la plaque de chemin magnétique est agencée d'un côté du substrat de détecteur à l'opposé d'un côté tourné vers l'indicateur de position (10),
une unité d'affichage étant disposée entre le substrat de détecteur et la plaque de chemin magnétique, dans lequel la plaque de chemin magnétique est disposée de manière à ce que sa couche amorphe soit disposée entre l'unité d'affichage et la couche non-amorphe,
la couche amorphe est configurée, de par sa perméabilité magnétique relative, pour former un chemin magnétique pour le flux magnétique généré par la bobine de détecteur du substrat de détecteur, la perméabilité magnétique relative empêchant l'atténuation du flux magnétique généré par la bobine de détecteur du substrat de détecteur en raison de pertes par courant de Foucault, et
la couche non-amorphe est configurée comme de l'aluminium présentant une perméabilité magnétique relative plus faible que celle de la couche amorphe, et présentant une conductivité protégeant le substrat de détecteur contre le bruit électromagnétique.
